# EUROPEAN PATENT APPLICATION

(11) **EP 4 269 237 A1**
(43) Date of publication of application: **01.11.2023**
(21) Application number: 22170777.1
(22) Date of filing: 29.04.2022
(51) Int. Cl.: B64C 25/06, B64C 25/12, B64C 25/62, B64C 25/34, B64C 25/52, B64C 25/54, B64C 25/32

(54) **A ROTARY WING AIRCRAFT WITH AN AT LEAST PARTIALLY NON-RETRACTABLE LANDING GEAR**

(71) Applicant: Airbus Urban Mobility GmbH, 80333 Munich (DE)
(72) Inventor: BLACHA, Martin, 86609 DONAUWÖRTH (DE); REICHENSPERGER, Christian, 86698 OBERNDORF AM LECH (DE); FINK, Axel, 86609 DONAUWÖRTH (DE); STEGER, Justus, 86709 WOLFERSTADT (DE)
(74) Representative: GPI Brevets

(57) **Abstract**

The invention is related to a rotary wing aircraft with a fuselage and an at least partially non-retractable landing gear, wherein the at least partially non-retractable landing gear comprises at least three individual support legs, wherein at least one individual support leg (30) of the at least three individual support legs is mounted pivotally to the fuselage by means of an associated pivot bearing arrangement (35), wherein the at least one individual support leg (30) is further connected to the fuselage via at least one tension device (36) with a predetermined elastic range, and wherein the at least one tension device (36) is adapted to act, in the predetermined elastic range, as a tension spring, and, outside of the predetermined elastic range, as an energy absorber.

## Description

The present invention is related to a rotary wing aircraft with a fuselage and a landing gear.

Conventional landing gears of rotary wing aircrafts are either provided as retractable or partially retractable landing gears, or as fixed, i. e. non-retractable landing gears. Retractable or partially retractable landing gears are usually embodied as wheel-type landing gears, while fixed landing gears are usually embodied as skid-type landing gears.

Use of a wheel-type landing gear or a skid-type landing gear for a given rotary wing aircraft mostly depends on a respective size and weight of the given rotary wing aircraft. In other words, wheel-type landing gears are usually implemented with larger rotary wing aircrafts in order to allow for an improved ground handling of such larger rotary wing aircrafts, while light-to-medium rotary wing aircrafts are usually implemented with skid-type landing gears.

In general, respective landing gears of rotary wing aircrafts, in particular rotary wing aircrafts with vertical take-off and landing capabilities, are designed to allow absorption of vertical energy occurring during landing by means of elastic deformation during a regular or normal landing and plastic deformation during a hard or downward crash landing. The plastic deformation mainly contributes to energy dissipation of the vertical energy and shock absorption during such a hard or downward crash landing. For instance, such a plastic deformation during a hard or downward crash landing may reach values of up to 360 mm in vertical direction at the aft cross tube and of up to 460 mm at the forward cross tube in a helicopter-type rotary wing aircraft with a conventional skid-type landing gear having two skid tubes, a forward cross tube, and an aft cross tube. An illustrative skid-type landing gear with two skid tubes, a forward cross tube, and an aft cross tube is described in the document EP 2 610 170 A1.

The document EP 2 712 804 B1, in turn, describes a helicopter-type rotary wing aircraft with a skid-type landing gear having a first skid and a second skid as well as two crossmembers, each having a first branch secured to the first skid, a second branch secured to the second skid, and a central portion that interconnects the first and second branch. The skid-type landing gear has one or more stiffeners acting as energy absorbers, each having a connecting rod and limiter means for limiting roll deformation of the central portion of an associated cross-member. Each limiter means is secured to the central portion of the associated cross-member. Furthermore, a main hinge is provided for each connecting rod and hinges the latter to the limiter means and a secondary hinge that connects each connecting rod to an outside point that is outside the central portion in order to limit deformation of the central portion as a result of a roll movement of the helicopter-type rotary wing aircraft.

However, the stiffeners which are provided to act as energy absorbers are additional energy absorbing components which are merely added to a conventional skid-type landing gear. Thus, the stiffeners increase system complexity of an underlying landing gear configuration and a respective overall weight of the helicopter-type rotary wing aircraft.

The documents EP 0 113 616 A1, CN 107 891 972 A, EP 2 878 535 A1 describe similar landing gear configurations with a conventional skid-type landing gear which is used as landing gear and to which additional energy absorbing components are added for energy absorption, such as dampers, buffers or other stiffeners. Other energy absorbing components are e. g. described in the document EP 1 984 645 B1.

The document US 2020/0346743 A1, in turn, describes a helicopter-type rotary wing aircraft with a fuselage and an energy absorbing landing system that includes landing legs which are rotatably coupled to the fuselage and configured to rotate outwardly when receiving a landing load that exceeds a predetermined magnitude. The energy absorbing landing system also includes an energy absorption unit that is embodied as a linear spring element and coupled to the fuselage, as well as cables coupling the energy absorption unit via associated cable routers to the landing legs. The energy absorption unit is configured to selectively apply a resistance to the outward rotation of the landing legs via the cables based on the magnitude of the landing load, thereby absorbing the landing load when the aircraft lands.

However, this energy absorbing landing system is also comparatively complex and leads to a comparatively high overall weight of the helicopter-type rotary wing aircraft due to the required multiple different components, such as the cables, cable routers as well as the energy absorption unit in the form of a linear spring element.

The document US 8,163,368 B2 describes a helicopter-type rotary wing aircraft with a wheel-type landing gear that comprises three individual legs, each being provided with an associated wheel. Two of the three individual legs are embodied as composite legs, each comprising a composite compression cap including reinforcing fibers that provide strength in compression, as well as a tension cap including reinforcing fibers that provide strength in tension. Each composite leg further includes a torque box including carbon reinforcing fibers for providing torsional rigidity of the leg and carrying shear flow between the caps.

However, although the composite legs provide a composite interface which transfers respective loads from the wheel-type landing gear led to the fuselage, there is no energy absorption to any extend in case of overloading due to an inherent limitation of composites to a linear-elastic regime of material behavior.

The documents EP 2 380 809 A1, US 2,997,261, US 3,042,345 A1 describe airplanes with other wheel-type landing gear systems which all include wheel-type landing gears with additional energy absorbing components that are added for energy absorption, such as dampers, plungers, struts, or other stiffeners. Furthermore, the document CN 111 976 969 A describes an airplane with a wheel-type landing gear with spiral spring elements that are merely used for energy storage, but not for energy absorption.

However, all of these wheel-type landing gear systems and landing gears exhibit a comparatively complex overall configuration and weight.

The document RU 2 621 416 C2, in turn, describes a spacecraft landing aid that comprises landing supports which are embodied as individual legs pivoting around a hinge point at the spacecraft's fuselage. More particularly, there is a rope made out of high modulus material with the purpose to stiffen the landing aid and to prevent the spacecraft from rolling over. A respective energy absorption function is done by a separate damper in a given main leg and is, thus, rather complex as dedicated dampers and actuation systems are required. Moreover, the rope is not intended to take energy in case of excessive landing speed or energy, respectively, and needs support by an associated actuator in order to be kept in place when not being in contact with ground.

However, this spacecraft landing aid also exhibits a comparatively complex overall configuration and weight.

It is, therefore, an object of the present invention to provide a new landing gear and, more particularly, a new rotary wing aircraft with a landing gear that overcomes the drawbacks of the above-described landing gears.

This object is solved by a rotary wing aircraft with a fuselage and an at least partially non-retractable landing gear that comprises the features of claim 1. More specifically, according to the present invention the at least partially non-retractable landing gear comprises at least three individual support legs, wherein at least one individual support leg of the at least three individual support legs is mounted pivotally to the fuselage by means of an associated pivot bearing arrangement, wherein the at least one individual support leg is further connected to the fuselage via at least one tension device with a predetermined elastic range, and wherein the at least one tension device is adapted to act, in the predetermined elastic range, as a tension spring, and, outside of the predetermined elastic range, as an energy absorber.

Advantageously, the at least partially non-retractable landing gear of the rotary wing aircraft according to the present invention fulfills the "no single point of failure" criteria of the EASA SC VTOL regulation due to provision of internal redundancies. In fact, every load path may simply be designed to be easily redundant.

Moreover, the at least partially non-retractable landing gear of the rotary wing aircraft according to the present invention advantageously consists of several major components forming a landing gear assembly. These major components can be arranged in various manners, whereby the share of functions is identical for each variant. Preferably, these major components comprise for the at least one individual support leg at least a leg box that forms the individual support leg as such, as well as a pivot bearing arrangement and a tension device which connect the leg box to the fuselage of a given rotary wing aircraft, wherein the fuselage forms an aircraft interface. Optionally, the major components may further comprise a fairing.

More specifically, the leg box is preferably provided to transfer during landing all loads from ground to the fuselage (global forces in X, Y and Z direction). During normal landings, the leg box preferentially works in an associated linear elastic range as its main function is to transfer loads and not to absorb energy. The leg box may be made of metal and/or composite material. By way of example, the leg box may be mounted pivotally by means of the pivot bearing arrangement in respective lateral quarter shells of the rotary wing aircraft with respect to an axis which is at least approximately in parallel to a longitudinal axis of the rotary wing aircraft (X-direction) or, in the case of a tricycle-type landing gear, with an axis perpendicular to the longitudinal axis of the rotary wing aircraft. An associated pivot axis of the leg box is preferably arranged such that in case of a hard landing or a downward crash the leg box rotates around this pivot axis.

Advantageously, the leg box may be optimized with respect to different individual design points. By way of example, the leg box may be weight-optimized or stiffness-optimized without impacting other items of the at least partially non-retractable landing gear.

Preferably, the leg box acts individually and is connected to an associated solid base that may e. g. form a ground contact device. This ground contact device is preferentially provided to transmit loads from ground to the leg box and may be implemented by any conventionally available device, such as e. g. a skid, a wheel, a snow shoe or even, in case of water or amphibious aircrafts, a floating device. In particular, use of a wheel enables e. g. rolling take-off and landings and further enables multiple applications of use. Preferentially, at least three punctual (e. g. wheels, snow shoes, etc.) or at least two linear (e. g. skids, etc.) ground contact devices are provided.

The pivot bearing arrangement is preferably provided to transfer during landing all forces in the vertical direction (forces in Z direction) from the leg box to the fuselage. More specifically, the main function of the pivot bearing arrangement is preferably to transfer shear forces from the leg box to the fuselage of the rotary wing aircraft.

The tension device is preferably embodied as a bi-linear absorber with an inherent nonlinear force characteristic. More specifically, the tension device preferentially works in two different stages or ranges respectively: In a regular or normal landing the tension device preferably merely acts to introduce loads from the leg box into the fuselage in an associated elastic range. Thus, the tension device essentially prevents the leg box from rotating around the pivot axis and functions as a tension spring. In other words, in a normal landing the tension device preferably stores occurring landing energy in a manner that is similar to an elastic spring effect. In a hard landing or downward crash, when a respectively occurring landing energy exceeds a predefined energy threshold or downward speed threshold, such as e. g. 1m/s, the tension device preferably dissipates respectively occurring kinetic energy by plasticization.

By way of example, the bi-linear absorber that forms the tension device may be designed as one part as a simple tension rod or strut, i. e. as a tension rod or strut made of a material with plasticization capabilities after exceeding yield strength in tension or shear respectively, which implies that a material with a predetermined plasticization capability is used. This provides a possibility to tailor an underlying force deflection curve of the at least partially non-retractable landing gear almost as desired and to increase its absorbing capability up to crashworthiness.

However, in case the material used for the tension rod or strut does not offer sufficient plasticization capability, a bolted connection that is adapted to dissipate energy by exceeding bearing strength may likewise be used. Alternatively, specific machine elements with a similar nonlinear force characteristic may also be used instead of a tension rod or strut. Moreover, also conventional energy absorbers such as oleo dampers may be used. All these energy absorbers have a nonlinear force characteristic in common.

Advantageously, use of separate components for realizing the tension device and the pivot bearing arrangement enables decoupling of the functions of energy absorption and load transfer such that the principles of lightweight construction may at least be applied to optimize design of the leg box. For instance, composite materials may be used or higher inertia materials due to increased support leg height. Furthermore, the tension device as energy absorbing part may also be optimized as it has no load transfer duty. As a result, the at least partially non-retractable landing gear may be implemented with a reduced overall weight.

Moreover, the use of separate components for realizing the tension device and the pivot bearing arrangement enables a respective drag landing load transfer path from the energy absorption, hence, there is no negative impact on an underlying absorbing capability due to load superposition. This advantage mainly affects separation of a need for strength in longitudinal direction and a need for softness/compliance in vertical or height direction.

Advantageously, the tension device may be embodied according to a plurality of different realizations. For instance, the tension device may be implemented by means of tension loaded rods or struts with elasto-plastic behavior, such as e. g. metallic tubes. Alternatively, the tension device may be implemented by means of hydraulic, pneumatic, and/or oleo dampers, or similar structures. Still alternatively, the tension device may be implemented by means of a conventional absorber structure such as e. g. used for crashworthy seats. Still alternatively, a bearing failure of two separate members bolted together and dissipating energy by destroying one of the two separate members by means of a bearing failure in a controlled manner may be used to implement the tension device. Moreover, such different realization forms may also be used together and e. g. arranged in parallel or in series in order to create higher order force deflection curves.

The fairing is preferably provided to embody the leg box with an aerodynamic shape in order to reduce aerodynamic drag. The fairing may be a separate component that is mounted to the leg box, or an integral part of the leg box. Preferentially, the fairing does not considerably contribute to stiffness and load carrying capacity of the leg box. However, as the fairing enables an overall design of the leg box which may at least approximate an airfoil, the overall aerodynamic drag of the at least partially non-retractable landing gear may be reduced significantly, and even more if it is designed without skids.

The aircraft interface is preferably provided to transmit forces from the leg box and respective moments from the tension device to the fuselage. Accordingly, the aircraft interface must provide sufficient strength and stiffness in order to sustain all loads transferred via the leg box and the tension device.

According to some aspects, the associated pivot bearing arrangement is provided to enable rotation of the at least one individual support leg about an associated rotation axis defined by the associated pivot bearing arrangement and to transfer shear forces from the at least one individual support leg to the fuselage, wherein the at least one tension device is embodied with an inherent nonlinear force characteristic.

According to some aspects, the at least one tension device rigidly attaches the at least one individual support leg to the fuselage to limit at least in the predetermined elastic range of the at least one tension device rotation of the individual support leg about the associated pivot bearing arrangement.

According to some aspects, the at least one tension device comprises at least one of a tension rod, a tension strut, a tension tube, or a damper.

According to some aspects, the at least one tension device is mounted to the fuselage close to the associated pivot bearing arrangement.

According to some aspects, the at least one tension device is at least partly arranged inside the at least one individual support leg.

According to some aspects, the at least one tension device is mounted to the fuselage at a position above the associated pivot bearing arrangement, the at least one tension device being connected to an additional energy absorber.

According to some aspects, the at least one tension device is mounted to an underside panel of the fuselage and at least approximately aligned with an underside wall of the fuselage.

According to some aspects, the at least one tension device comprises a first strut member and a second strut member, both of which are either attached at different positions to the fuselage, and/or at different positions to the at least one individual support leg.

According to some aspects, the first strut member and the second strut member are embodied with different force characteristics.

According to some aspects, a restraint element is provided for guiding the deformation of the at least one tension device.

According to some aspects, the predetermined elastic range of the at least one tension device is exceeded if the rotary wing aircraft lands with a downward speed of more than nominal downward speed.

According to some aspects, the at least one individual support leg comprises an aerodynamically shaped fairing or outer structure.

According to some aspects, the at least one individual support leg is connected to an associated ground-contact device.

According to some aspects, the at least three individual support legs comprise at least two individual support legs which are tuned individually and comprise at least one of a different weight, a different stiffness, a different shape, or a different energy dissipation capability/principle.

It should be noted that the various different aspects of the present invention which are described above should not be understood as separate, isolated embodiments. Instead, any feasible combinations of the different aspects are likewise contemplated.

By way of example, in an illustrative realization of the inventive rotary wing aircraft with a fuselage and an at least partially non-retractable landing gear, the at least partially non-retractable landing gear may comprise at least three individual support legs, wherein each individual support leg is mounted pivotally to the fuselage by means of at least one shear pin which is provided to transfer shear forces from the individual support leg to the fuselage, wherein each individual support leg is further connected to the fuselage via at least one tension rod or strut with a predetermined elastic range, the at least one tension rod or strut being provided to transfer bending moments from the individual support leg to the fuselage, and wherein the at least one tension rod or strut is adapted to act, in the predetermined elastic range, as a tension spring, and, outside of the predetermined elastic range, as an energy absorber.

Illustrative embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a rotary wing aircraft with a fuselage and an at least partially non-retractable landing gear according to the present invention,
- Figure 2A to Figure 2C show perspective views of the rotary wing aircraft with the fuselage and the at least partially non-retractable landing gear of Figure 1, with different ground contact devices,
- Figure 3A to Figure 3F show schematic views of a fuselage subfloor group of the fuselage of the rotary wing aircraft of Figure 1 to Figure 2C with an individual support leg of the at least partially non-retractable landing gear of Figure 1 to Figure 2C according to different embodiments,
- Figure 4A to Figure 4B show schematic views of a fuselage subfloor group of the fuselage of the rotary wing aircraft of Figure 1 to Figure 2C with an individual support leg of the at least partially non-retractable landing gear of Figure 1 to Figure 2C according to still another embodiment with a restraint element, and
- Figure 5A to Figure 5D show schematic views of different tension devices according to the present invention.

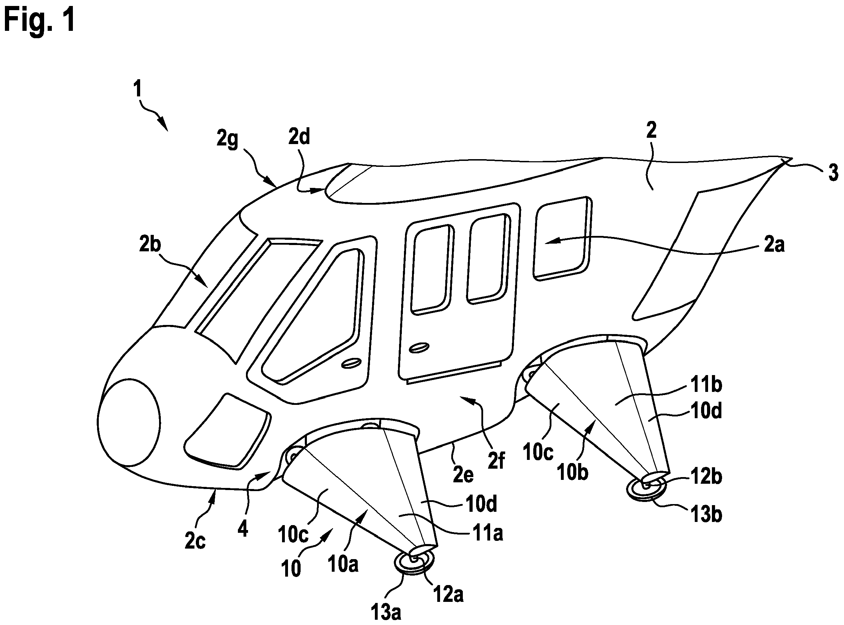

Figure 1 shows an aircraft 1 that is by way of example illustrated as a rotary wing aircraft, in particular as a Vertical Take-Off and Landing aircraft, and, more particularly, as a helicopter. Thus, for purposes of simplicity and clarity, the aircraft 1 is hereinafter referred to as the "helicopter 1".

Illustratively, the helicopter 1 comprises a fuselage 2 that forms, by way of example, a cabin 2a and a cockpit 2b. The fuselage 2 is connected to a tail boom 3 and comprises a lower fuselage region 2c, as well as an upper fuselage region 2d. Furthermore, the fuselage 2 is provided with an underside shell or panel 2e, a portside shell 2f, and a starboard side shell 2g. Moreover, lateral quarter shells 4 are preferably provided in an area of the portside shell 2f and the starboard side shell 2g which is close to the underside shell or panel 2e.

According to one aspect, the helicopter 1 comprises a landing gear 10. At this point it should be noted that only a part of the helicopter 1 with the fuselage 2 and the landing gear 10 is shown to illustrate the landing gear 10 and connection of the landing gear 10 to the fuselage 2 in more detail, while illustration of other well-known components is omitted, for simplicity and clarity of the drawing. For instance, neither the tail boom 3 is illustrated in greater detail for showing e. g. a suitable counter-torque device, nor a main rotor is shown, and so on.

Preferably, the landing gear 10 is at least partially non-retractable and, by way of example, the landing gear 10 is non-retractable. According to the present invention, the landing gear 10 comprises at least three individual support legs, wherein at least one individual support leg of the at least three individual support legs is mounted pivotally to the fuselage 2, as described in more detail below.

By way of example, and not for restricting the present invention accordingly, the landing gear 10 comprises four individual support legs, from which only two individual support legs are visible in Figure 1 and labelled with the reference signs 10a, 10b. Preferably, at least two individual support legs of the four individual support legs, e. g. the support legs 10a, 10b, are tuned individually and comprise at least one of a different weight, a different stiffness, a different shape, or a different energy dissipation capability/principle. The individual support legs 10a, 10b are preferably separately mounted pivotally to the fuselage 2 at the lateral quarter shells 4.

Illustratively, the individual support leg 10a comprises a leg box 11a that may be aerodynamically shaped. The leg box 11a may be connected via a support rod 12a to a solid base 13a that forms a ground contact device. By way of example, the solid base 13a is formed as a base plate or pad. Similarly, the individual support leg 10b comprises a leg box 11b that may also be aerodynamically shaped and that may be connected via a support rod 12b to a solid base 13b that forms a ground contact device. By way of example, the solid base 13b is also formed as a base plate or pad.

The leg boxes 11a, 11b may respectively be provided with a leading edge fairing 10c and a trailing edge fairing 10d. However, the leading and trailing edge fairings 10c, 10d may likewise be formed integrally in one part with the leg boxes 11a, 11b.

It should be noted that the individual support legs 10a, 10b are illustratively configured identically, at least within predetermined manufacturing tolerances. However, they may also distinguish from each other and be arranged differently on the fuselage 2. For instance, instead of providing the helicopter 1 with four individual support legs as illustrated, only three individual support legs may be provided. In this case, two of the three individual support legs may be mounted similar to what is shown in Figure 1 either in a front or in an aft region of the helicopter 1, while the third individual support leg is respectively mounted in the aft or the front region and oriented perpendicular to the two other individual support legs, and so on.

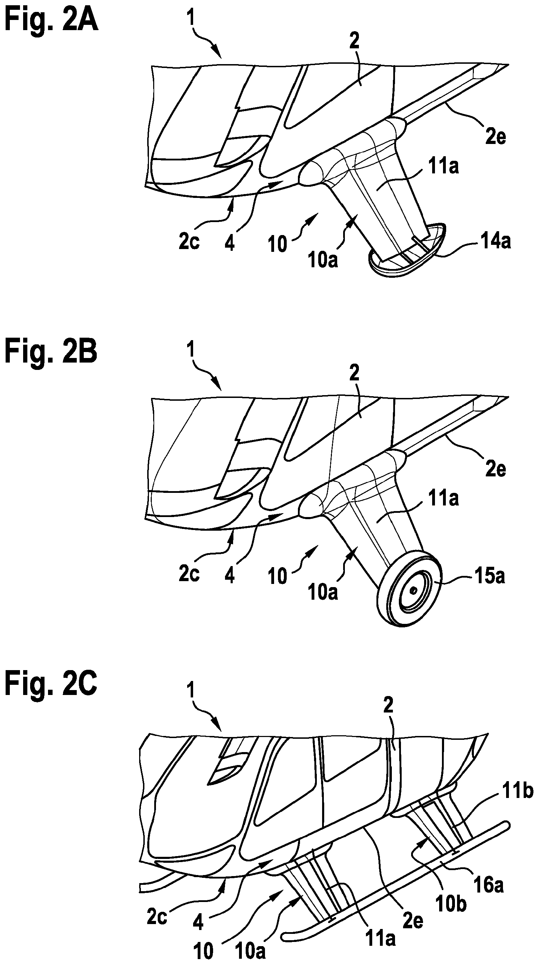

Figure 2A shows a cut-out of the helicopter 1 with the fuselage 2 and the landing gear 10 of Figure 1. The fuselage 2 has the lower fuselage region 2c with the underside shell or panel 2e and the lateral quarter shell 4, to which the individual support leg 10a with the leg box 11a of the landing gear 10 is mounted pivotally. However, by way of example the leg box 11a is now connected to a snow shoe 14a.

Figure 2B shows a cut-out of the helicopter 1 with the fuselage 2 and the landing gear 10 of Figure 1. The fuselage 2 has the lower fuselage region 2c with the underside shell or panel 2e and the lateral quarter shell 4, to which the individual support leg 10a with the leg box 11a of the landing gear 10 is mounted pivotally. However, by way of example the leg box 11a now rotatably supports a wheel 15a.

Figure 2C shows a cut-out of the helicopter 1 with the fuselage 2 and the landing gear 10 of Figure 1. The fuselage 2 has the lower fuselage region 2c with the underside shell or panel 2e and the lateral quarter shell 4, to which the individual support legs 10a, 10b with the leg boxes 11a, 11b of the landing gear 10 are respectively mounted pivotally. However, by way of example the leg boxes 11a, 11b are now illustratively connected to a common skid 16a.

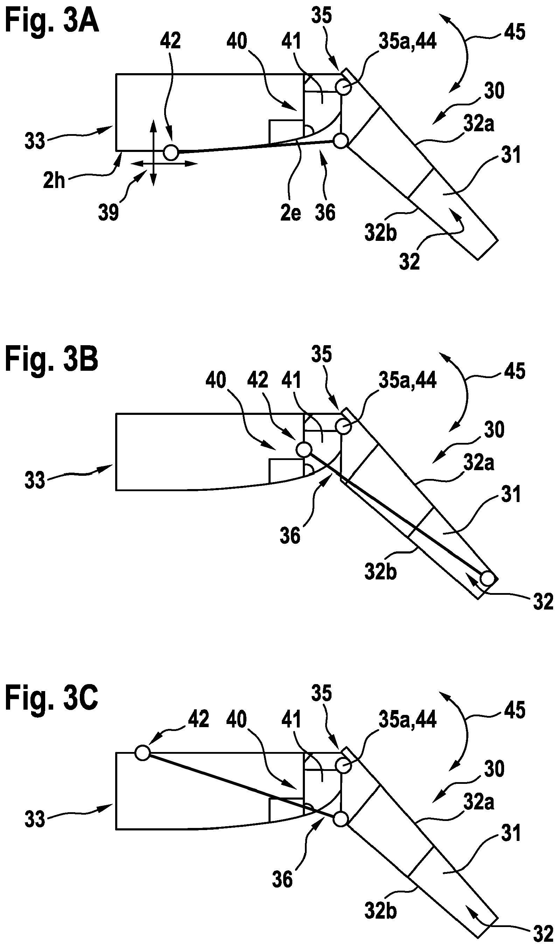

Figure 3A shows an illustrative support leg 30 that is mounted pivotally by means of a pivot bearing arrangement 35 to associated fuselage frames 40. Illustratively, the pivot bearing arrangement 35 comprises a pivot shaft 35a that may be embodied by one or more shear pins and that forms a rotation axis 44 about which the support leg 30 is pivotable, as indicated with an arrow 45. Preferably, the pivot bearing arrangement 35 is provided to transfer shear forces from the support leg 30 to the fuselage frames 40.

By way of example, suitable support legs and pivot bearing arrangements which may be used to implement the support leg 30 and the pivot bearing arrangement 35 are described in detail in the European patent application No. EP22170750.8, which is incorporated in its entirety hereinto by reference.

Illustratively, the support leg 30 comprises an aerodynamically shaped leg structure 31 with a beam-like structural part 32 and upper and lower skins or outer structures 32a, 32b. The aerodynamically shaped leg structure 31 with the beam-like structural part 32 is a loaded structural part which may be realized in any state-of-the-art technology/material, e. g. metals, polymers or composites. From a design point of view, all concepts of lightweight construction such as e. g. a lattice/spaceframe, stiffened shell or others are feasible. In other words, any design principle that makes the support leg 30 work as bending loaded item may be used.

The support leg 30 may e. g. be used to implement one or more of the individual support legs 10a, 10b of Figure 1. In this case, the fuselage frames 40 are preferably an integral part of the fuselage 2 of Figure 1.

Preferably, the fuselage frames 40 include at least one web 41 to which the support leg 30 is pivotally mounted by means of the pivot bearing arrangement 35. The at least one web 41 is illustratively an integral part of a fuselage subfloor group 33 that further comprises the underside shell or panel 2e of Figure 1 to Figure 2C and an underside wall 2h.

Preferably, the support leg 30 is further adapted for being connected to the fuselage, i. e. the fuselage frames 40, via at least one tension device 36 with a predetermined elastic range, wherein the at least one tension device 36 is adapted to act, in the predetermined elastic range, as a tension spring, and, outside of the predetermined elastic range, as an energy absorber. The predetermined elastic range of the at least one tension device 36 is preferably exceeded if the rotary wing aircraft 1 of Figure 1 to Figure 2C lands with a downward speed of more than nominal downward speed.

The at least one tension device 36 is preferentially embodied with an inherent nonlinear force characteristic. Preferably, the at least one tension device 36 is rigidly attached to the support leg 30 and to the fuselage, i. e. the fuselage frames 40, to limit at least in the predetermined elastic range of the at least one tension device 36 rotation of the support leg 30 about the rotation axis 44 defined by the pivot bearing arrangement 35.

By way of example, the at least one tension device 36 is mounted to the underside shell or panel 2e and, preferentially, at least approximately aligned with the underside wall 2h, as illustrated. More particularly, the at least one tension device 36 is routed outside of the support leg 30 and rigidly attached to the underside shell or panel 2e at an associated attachment point 42. This attachment point 42 is illustratively almost horizontally located below the fuselage subfloor group 33, i. e. at an underside of the underside shell or panel 2e. However, the attachment point 42 is not limited to a particular location on the underside shell or panel 2e, but may be shifted almost arbitrarily in the horizontal or vertical direction, as indicated with arrows 39, thus, resulting in different possible lengths of the at least one tension device 36.

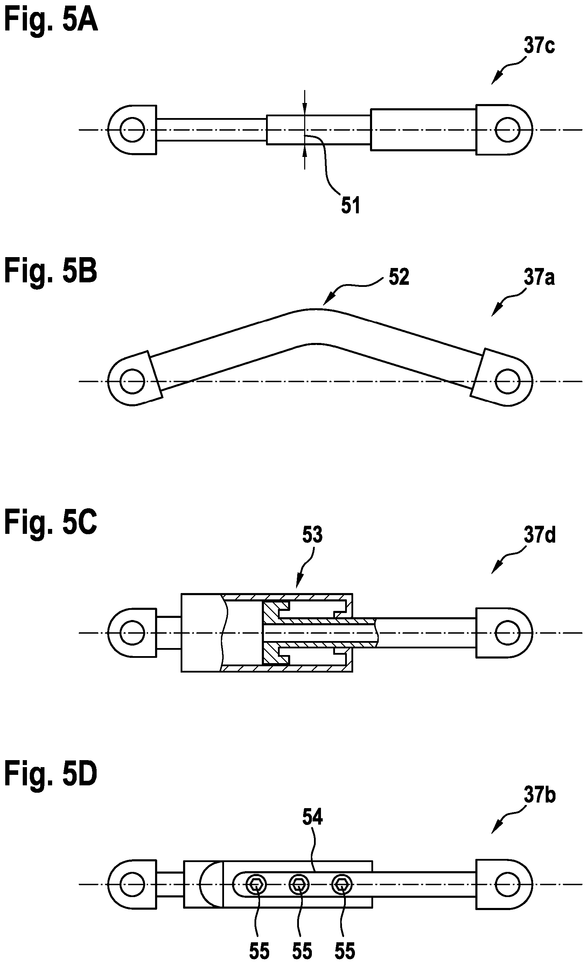

The at least one tension device 36 may comprise at least one of a tension rod (37a in Figure 5B), a tension strut (37b in Figure 5D), or a tension tube (37c in Figure 5A) that rigidly attaches the support leg 30 to the fuselage, i. e. the fuselage frames 40, to limit at least in the predetermined elastic range of the at least one tension device 36 rotation of the support leg 30 about the pivot bearing arrangement 35. By way of example, the at least one tension device 36 of Figure 3A is embodied as a tension rod. However, other tension devices may likewise be used, such as e. g. a damper (37d in Figure 5C), and so on.

Figure 3B shows the support leg 30 with the aerodynamically shaped leg structure 31 that includes the beam-like structural part 32, the pivot bearing arrangement 35, the at least one tension device 36, and the associated fuselage frames 40 with the at least one web 41 of the fuselage subfloor group 33 of Figure 3A. The support leg 30 is pivotally mounted by means of the pivot bearing arrangement 35 to the fuselage frames 40 at the at least one web 41. Furthermore, the support leg 30 is rigidly attached to the attachment point 42 by means of the at least one tension device 36, which is again embodied as a tension rod, by way of example.

However, in contrast to Figure 3A, the attachment point 42 of the at least one tension device 36 is now preferably provided close to the associated pivot bearing arrangement 35 and, illustratively, located in the region of, or on, the at least one web 41. More specifically, the attachment point 42 may be formed at the fuselage subfloor group 33, i. e. directly at the fuselage frames 40, for attachment of the at least one tension device 36 in the fuselage subfloor group 33 to the fuselage frames 40. The at least one tension device 36 is preferably at least partly arranged inside the support leg 30, i. e. inside the aerodynamically shaped leg structure 31 with the beam-like structural part 32.

Advantageously, by arranging the at least one tension device 36, i. e. the attachment point 42, and the pivot bearing arrangement 35 close to each other, exchange of the support leg 30 is simplified and occurring loads are transferred in a close arrangement, which shortens an underlying load path.

Figure 3C shows the support leg 30 with the aerodynamically shaped leg structure 31 that includes the beam-like structural part 32, the pivot bearing arrangement 35, the at least one tension device 36, and the associated fuselage frames 40 with the at least one web 41 of the fuselage subfloor group 33 of Figure 3A. The support leg 30 is pivotally mounted by means of the pivot bearing arrangement 35 to the fuselage frames 40 at the at least one web 41. Furthermore, the support leg 30 is rigidly attached to the attachment point 42 by means of the at least one tension device 36, which is again embodied as a tension rod, by way of example.

However, in contrast to Figure 3A, the attachment point 42 of the at least one tension device 36 is now preferably arranged inside the fuselage subfloor group 33. More specifically, the attachment point 42 is preferentially located in the fuselage subfloor group 33 such that the at least one tension device 36 is diagonally guided inside the fuselage subfloor group 36. Similar to Figure 3B, the attachment point 42 may directly be located on the fuselage frames 40 for attachment of the at least one tension device 36 in the fuselage subfloor group 33 to the fuselage frames 40.

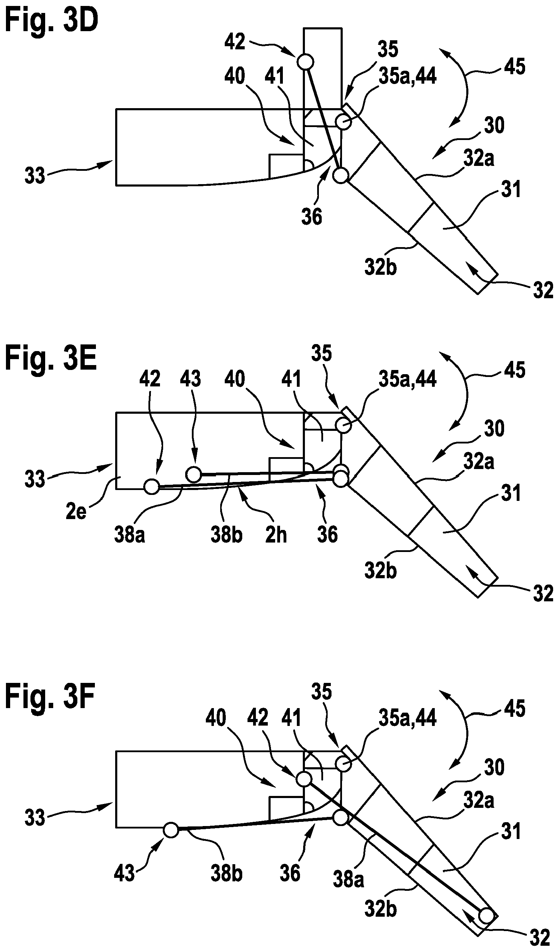

Figure 3D shows the support leg 30 with the aerodynamically shaped leg structure 31 that includes the beam-like structural part 32, the pivot bearing arrangement 35, the at least one tension device 36, and the associated fuselage frames 40 with the at least one web 41 of the fuselage subfloor group 33 of Figure 3A. The support leg 30 is pivotally mounted by means of the pivot bearing arrangement 35 to the fuselage frames 40 at the at least one web 41. Furthermore, the support leg 30 is rigidly attached to the attachment point 42 by means of the at least one tension device 36, which is again embodied as a tension rod, by way of example.

However, in contrast to Figure 3A, the attachment point 42 of the at least one tension device 36 is now preferably arranged at a position above the pivot bearing arrangement 35, preferentially above the fuselage subfloor group 33, i. e. in height direction above the fuselage subfloor group 33, e. g. at the lateral quarter shell 4 of Figure 1.

Figure 3E shows the support leg 30 with the aerodynamically shaped leg structure 31 that includes the beam-like structural part 32, the pivot bearing arrangement 35, the at least one tension device 36, and the associated fuselage frames 40 with the at least one web 41 of the fuselage subfloor group 33 of Figure 3A. The support leg 30 is pivotally mounted by means of the pivot bearing arrangement 35 to the fuselage frames 40 at the at least one web 41.

However, in contrast to Figure 3A, the at least one tension device 36 now comprises a first strut member 38a and a second strut member 38b, both of which are attached at different positions to the fuselage frames 40. More specifically, the strut member 38a is illustratively mounted at the attachment point 42 of Figure 3A to the underside shell or panel 2e and at least approximately aligned with the underside wall 2h, and the strut member 38b is illustratively mounted at an attachment point 43 to the underside shell or panel 2e and at least approximately aligned with the underside wall 2h. The attachment points 42, 43 are both illustratively almost horizontally below the fuselage subfloor group 33, i. e. at an underside of the underside shell or panel 2e.

The strut members 38a, 38b may be embodied with different characteristics or properties, in particular different force characteristics. Alternatively, or in addition, the strut members 38a, 38b may be made from different materials.

Figure 3F shows the support leg 30 with the aerodynamically shaped leg structure 31 that includes the beam-like structural part 32, the pivot bearing arrangement 35, the at least one tension device 36 with the strut members 38a, 38b, and the associated fuselage frames 40 with the at least one web 41 of the fuselage subfloor group 33 of Figure 3E. The support leg 30 is pivotally mounted by means of the pivot bearing arrangement 35 to the fuselage frames 40 at the at least one web 41. Furthermore, the support leg 30 is rigidly attached to the attachment point 42 by means of the strut member 38a and to the attachment point 43 by means of the strut member 38b.

However, in contrast to Figure 3E, the attachment point 42 of the strut member 38a is now again located close to the associated pivot bearing arrangement 35 and, illustratively, located in the region of, or on, the at least one web 41, similar to Figure 3B. Accordingly, the strut member 38a is now at least partly arranged inside the support leg 30, i. e. inside the aerodynamically shaped leg structure 31 with the beam-like structural part 32. As a result, the strut members 38a, 38b are attached at different positions to the support leg, i. e. the aerodynamically shaped leg structure 31 with the beam-like structural part 32.

In should be noted that Figure 3F is intended to illustrate use of the two strut members 38a, 38b of Figure 3E in an arrangement that differs from the one shown in Figure 3E and according to which any one of the two strut members 38a, 38b may be arranged and oriented according to any one of the configurations shown in Figure 3A to Figure 3E. Even other arrangements and orientations out-of-plane or in parallel planes are possible and contemplated in the context of the present invention.

In other words, several strut members may be arranged in any arbitrary orientation, length and position according to respective individual needs. Furthermore, strut members in a staggered arrangement in flight direction, perpendicular to flight direction and even diagonal or in parallel planes are possible, and so on.

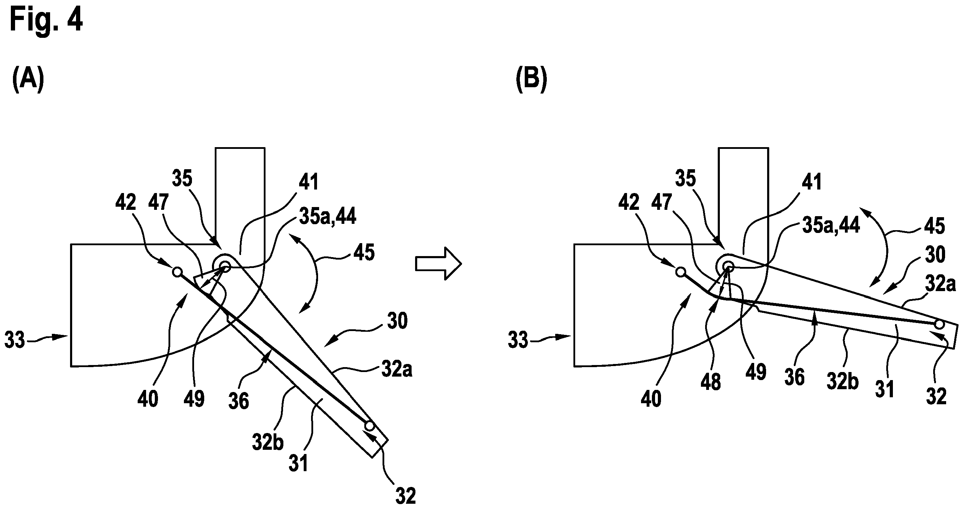

Figure 4, part (A) and (B), shows the support leg 30 with the aerodynamically shaped leg structure 31 that includes the beam-like structural part 32, the pivot bearing arrangement 35 with the rotation axis 44, the at least one tension device 36, and the associated fuselage frames 40 with the at least one web 41 of the fuselage subfloor group 33 of Figure 3B. As described above with reference to Figure 3B, the support leg 30 is pivotally mounted by means of the pivot bearing arrangement 35 to the fuselage frames 40 at the at least one web 41, and the support leg 30 is further rigidly attached to the attachment point 42 by means of the at least one tension device 36, which is again embodied as a tension rod, wherein the attachment point 42 of the at least one tension device 36 is provided according to Figure 3B close to the associated pivot bearing arrangement 35 and, illustratively, located in the region of, or on, the at least one web 41.

However, in contrast to Figure 3B, the support leg 30 is now further provided with a restraint element 47. The restraint element 47 is preferably provided for guiding deformation of the at least one tension device 36. More particularly, the restraint element 47 is preferentially provided to keep a constant lever arm vs. the rotation axis 44 or, depending on an underlying restraint element geometry, to modify an associated force deflection curve.

More specifically, part (A) of Figure 4 illustrates the restraint element 47 and the at least one tension device 36 in an unloaded state. In this unloaded state, the at least one tension device 36 is preferably acting within its elastic range and the restraint element 47 does not exert any force on the at least one tension device 36.

Part (B) of Figure 4, in turn, illustrates the restraint element 47 and the at least one tension device 36 in a loaded state. The loaded state is reached from the unloaded state by rotating the support leg 30 about the rotation axis 44 of the pivot bearing arrangement 35, illustratively upwards.

In such an upward rotation, the restraint element 47 restraints, i. e. blocks, the at least one tension device 36 such that a bent region 48 is formed in the at least one tension device 36, as the restraint element 47 ensures a constant distance 49 between the at least one tension device 36 and the rotation axis 44. Thus, the at least one tension device 36 is plastically deformed around the restraint element 47 and preferably acting outside of its elastic range, i. e. within its plastic range.

Figure 5A shows an illustrative tension tube 37c, which may e. g. be used to implement the at least one tension device 36 of Figure 3A to Figure 4. By way of example, the tension tube 37c comprises a variable tube diameter 51.

More specifically, the tension tube 37c may be metallic and a required bi-linearity may be achieved by plasticization. Furthermore, the tension tube 37c may be an assembled tension tube that may be metallic or comprise composite material, wherein the bi-linearity is achieved by bearing failure of the assembled tension tube. Furthermore, the tension tube 37c may be an assembled tension tube of two metallic tubes, or one metallic and one composite tube, wherein the bi-linearity is achieved by plasticization. Moreover, the tension tube 37c may feature a conventional absorber/load limiter behavior and an optional member that increases the elastic range of the absorber.

Figure 5B shows an illustrative tension rod 37a, which may e. g. be used to implement the at least one tension device 36 of Figure 3A to Figure 4. By way of example, the tension rod 37a comprises a kinked region 52.

Figure 5C shows an illustrative damper 37d, which may e. g. be used to implement the at least one tension device 36 of Figure 3A to Figure 4. By way of example, the damper 37d comprises an oleo damping unit 53.

Figure 5D shows an illustrative tension strut 37b, which may e. g. be used to implement the at least one tension device 36 of Figure 3A to Figure 4. By way of example, the tension strut 37b comprises a shear out member 54 with shear pins 55.

It should be noted that modifications to the above described embodiments are within the common knowledge of the person skilled in the art and, thus, also considered as being part of the present invention. More particularly, the at least partially non-retractable landing gear 10 of the rotary wing aircraft 1 of Figure 1 described above is mainly characterized in that the load reaction respectively load path for normal loads and for bending loads is separated such that an underlying design may be adapted easily to individual loading conditions. These loading conditions may, in turn, be influenced by the design itself as respective individual components of the load with their corresponding equilibrium of forces and moments are acting in perpendicular planes which have a minor interaction to each other. In consequence, the respective individual load components may easily be separated for sizing and material selection and, thus, for optimization.

Moreover, a dedicated "weak point" may be predefined in the overall structure of the landing gear at the location of the tension device. This location triggers the global behavior of the landing gear and may be taken as reference point for the design of the landing gear: all loads exceeding a certain level may be cut-off if exceeding a predetermined threshold value.

During normal operation, preferably the entire at least partially non-retractable landing gear according to the present invention acts in its elastic range, but as during operation local short-time overload may take place, the tension device takes these overload forces and dissipates small fractions of energy by plasticization. Accordingly, during normal operation the plasticization of the tension device may be used as an indicator and measurement device for the loads which occurred during operation. As all other parts are preferably still operating in their elastic range when the tension device already operates in its plastic range, only the tension device has to be exchanged from time to time.

The shown innovative arrangement is further beneficial in that, should a hard or downward crash landing within the design envelope occur, the deformed element, i. e. the tension device, is of simple and easily exchangeable nature and, thus, may be exchanged quickly. Further benefit is achieved as the tension device, by magnitude of its deformation, provides a clear indication of forces having acted on the inventive landing gear and, thus, allows simple classification of incident severity and associated required return-to-service actions.

In addition, the inventive landing gear provides a solution to provide multiple landing gear configurations (wheeled, skid, etc.) on a common airframe structure without requiring significant structural changes in manufacturing (cost) or inclusions of structural provisions (weight) for multiple configurations.

Moreover, it should be noted that any possible combination of the above-described tension devices which may be implemented to create higher order force deflection curves is also envisaged and contemplated. More specifically, the tension tube of Figure 5A may e. g. be enhanced with a (metallic) crash strap that is either installed with an initial slack or fitted with an elongated hole. In both cases, loads are taken just after a predefined displacement defined by the slack respectively the length of the elongated hole. Furthermore, two different ones of the described tension devices with different characteristics may be used in serial arrangement. Moreover, the damper 37d of Figure 5C may e. g. be incorporated into an associated crash chamber, and so on.

Finally, it should be noted that there are two available main principles of arrangement and integration of the tension device: the tension device may either be integrated to the fuselage, as e. g. described above at Figure 3C, or in the support leg itself, as e. g. described above at Figure 3B, by way of example. The integration into the support leg is particularly interesting in the following cases:
- The respective at least partially non-retractable landing gear is designed for a high vertical stroke or energy absorption respectively.
- The nature of the tension device requires a certain minimum length (e. g. for a metallic tube), which makes fuselage integration complicated, as a big area in the respective fuselage subfloor group is required but already populated by other systems like fuel, flight controls, etc.
- The design space within the respective rotary wing aircraft is very limited.

### Reference List

- 1: rotary wing aircraft
- 2: fuselage
- 2a: cabin
- 2b: cockpit
- 2c: lower fuselage region
- 2d: upper fuselage region
- 2e: underside shell or panel
- 2f: portside shell
- 2g: starboard side shell
- 2h: underside wall
- 3: tail boom
- 4: lateral quarter shell
- 10: non-retractable landing gear
- 10a, 10b: individual support legs
- 10c: leading edge fairings
- 10d: trailing edge fairings
- 11a, 11b: aerodynamically shaped leg boxes
- 12a, 12b: support rods
- 13a, 13b: solid bases
- 14a: snow shoe
- 15a: wheel
- 16a: skid
- 30: support leg
- 31: aerodynamically shaped leg structure
- 32: beam-like structural part
- 32a, 32b: upper and lower skins or outer structures
- 33: fuselage subfloor group
- 35: pivot bearing arrangement
- 35a: pivot shaft
- 36: tension device
- 37a: tension rod
- 37b: tension strut
- 37c: tension tube
- 37d: damper
- 38a, 38b: strut members
- 39: shifting directions
- 40: fuselage frames
- 41: individual frame
- 42, 43: attachment points
- 44: rotation axis
- 45: support leg rotation
- 47: restraint element
- 48: bent region
- 49: constant distance
- 51: tube diameter
- 52: kinked region
- 53: oleo damping unit
- 54: shear out member
- 55: shear pins

## Claims

1. A rotary wing aircraft (1) with a fuselage (2) and an at least partially non-retractable landing gear (10), wherein the at least partially non-retractable landing gear (10) comprises at least three individual support legs (10a, 10b), wherein at least one individual support leg (30) of the at least three individual support legs (10a, 10b) is mounted pivotally to the fuselage (2) by means of an associated pivot bearing arrangement (35), wherein the at least one individual support leg (30) is further connected to the fuselage (2) via at least one tension device (36) with a predetermined elastic range, and wherein the at least one tension device (36) is adapted to act in the predetermined elastic range as a tension spring, and, outside of the predetermined elastic range, as an energy absorber.

2. The rotary wing aircraft (1) of claim 1,
wherein the associated pivot bearing arrangement (35) is provided to enable rotation of the at least one individual support leg (30) about an associated rotation axis (44) defined by the associated pivot bearing arrangement (35) and to transfer shear forces from the at least one individual support leg (30) to the fuselage (2), and wherein the at least one tension device (36) is embodied with an inherent nonlinear force characteristic.

3. The rotary wing aircraft (1) of claim 1 or 2,
wherein the at least one tension device (36) rigidly attaches the at least one individual support leg (30) to the fuselage (2) to limit at least in the predetermined elastic range of the at least one tension device (36) rotation of the individual support leg (30) about the associated pivot bearing arrangement (35).

4. The rotary wing aircraft (1) of any one of the preceding claims,
wherein the at least one tension device (36) comprises at least one of a tension rod (37a), a tension strut (37b), a tension tube (37c), or a damper (37d).

5. The rotary wing aircraft (1) of any one of the preceding claims,
wherein the at least one tension device (36) is mounted to the fuselage (2) close to the associated pivot bearing arrangement (35).

6. The rotary wing aircraft (1) of any one of the preceding claims,
wherein the at least one tension device (36) is at least partly arranged inside the at least one individual support leg (30).

7. The rotary wing aircraft (1) of claim 5 or 6,
wherein the at least one tension device (36) is mounted to the fuselage (2) at a position above the associated pivot bearing arrangement (35).

8. The rotary wing aircraft (1) of any one of claims 1 to 4,
wherein the at least one tension device (36) is mounted to an underside panel (2e) of the fuselage (2) and at least approximately aligned with an underside wall (2h) of the fuselage (2).

9. The rotary wing aircraft (1) of any one of the preceding claims,
wherein the at least one tension device (36) comprises a first strut member (38a) and a second strut member (38b), both of which are either attached at different positions to the fuselage (2), and/or at different positions to the at least one individual support leg (30).

10. The rotary wing aircraft (1) of claim 9,
wherein the first strut member (38a) and the second strut member (38b) are embodied with different force characteristics.

11. The rotary wing aircraft (1) of any one of the preceding claims,
wherein a restraint element (47) is provided for guiding the deformation of the at least one tension device (36).

12. The rotary wing aircraft (1) of any one of the preceding claims,
wherein the predetermined elastic range of the at least one tension device (36) is exceeded if the rotary wing aircraft (1) lands with a downward speed of more than nominal downward speed.

13. The rotary wing aircraft (1) of any one of the preceding claims,
wherein the at least one individual support leg (30) comprises an aerodynamically shaped outer leg structure (31).

14. The rotary wing aircraft (1) of any one of the preceding claims,
wherein the at least one individual support leg is connected to an associated ground-contact device (14a, 15a).

15. The rotary wing aircraft (1) of any one of the preceding claims,
wherein the at least three individual support legs comprise at least two individual support legs (10a, 10b) which are tuned individually and comprise at least one of a different weight, a different stiffness, a different shape, or a different energy dissipation capability/principle.
